# EUROPÄISCHE PATENTSCHRIFT

(11) **EP 4 299 483 B1**
(45) Veröffentlichungstag und Bekanntmachung des Hinweises auf die Patenterteilung: **20.05.2026**
(21) Anmeldenummer: 23177915.8
(22) Anmeldetag: 07.06.2023
(51) Int. Cl.: B65G 43/00, B65G 47/84, B65G 43/10, B29C 49/36, B29C 49/42, B29C 49/68, B29C 49/64

(54) **VERFAHREN ZUM BETRIEB EINER BEHÄLTERBEHANDLUNGSANORDNUNG SOWIE BEHÄLTERBEHANDLUNGSANORDNUNG**
METHOD FOR OPERATING A CONTAINER TREATMENT ASSEMBLY AND CONTAINER TREATMENT ASSEMBLY
PROCÉDÉ DE FONCTIONNEMENT D'UN DISPOSITIF DE TRAITEMENT DE RÉCIPIENTS ET DISPOSITIF DE TRAITEMENT DE RÉCIPIENTS

(30) Priorität: 30.06.2022 DE 102022116301
(43) Veröffentlichungstag der Anmeldung: 03.01.2024
(73) Patentinhaber: KHS GmbH, 44143 Dortmund (DE)
(72) Erfinder: Heller, Alexander, 22941 Bargteheide (DE); Lewin, Frank, 22889 Tangstedt (DE)
(74) Vertreter: Andrejewski - Honke Patent- und Rechtsanwälte Partnerschaft mbB

(56) Entgegenhaltungen:
- DE-A1- 102020 122 470
- US-A1- 2019 061 225

## Beschreibung

Die vorliegende Erfindung betrifft ein Verfahren zum Betrieb einer Behälterbehandlungsanordnung mit einer Behälterzuführung, zumindest einer eine Vielzahl umlaufend rotierbar angeordneter Transportelemente aufweisenden Behältertransportvorrichtung und einem Vereinzelungsstern zum Überführen von Behältern aus der Behälterzuführung in die Transportelemente der Behältertransportvorrichtung, wobei zum Betriebsstart ein erster Behälter dem Vereinzelungsstern zugeführt, in einer Bewegung entlang einer Transportstrecke durch Rotation des Vereinzelungssterns in die Behältertransportvorrichtung überführt und in der Behältertransportvorrichtung transportiert wird. Entsprechend erstreckt sich die Transportstrecke sowohl entlang des Vereinzelungssterns als auch entlang der Behältertransportvorrichtung.

Das Verfahren betrifft insbesondere den Betriebsstart von Behälterbehandlungsanordnungen in der Getränkeindustrie. Vor diesem Hintergrund handelt es sich bei den Behältern insbesondere um Getränkebehälter, z.B. Getränkeflaschen aus Kunststoff oder aus Glas. Besonders bevorzugt ist jedoch eine Ausgestaltung der Behälter in Form von Vorformlingen, welche üblicherweise auch als Preforms bezeichnet werden. Diese Vorformlinge sind aus einem thermoplastischen Material insbesondere Polyethylenterephthalat (PET) gebildet und können in einer Blasvorrichtung durch plastische Verformung zu Getränkebehältern ausgebildet werden.

In der Getränkeindustrie ist es bekannt, dass zu verschiedenen Zwecken eine Vielzahl von Behältern einer Behältertransportvorrichtung vereinzelt zugeführt wird. Die Behältertransportvorrichtung kann grundsätzlich in verschiedener Art und Weise ausgebildet sein und neben einem Transport auch eine Behandlung der entsprechenden Behälter vorsehen. Beispielsweise kann es sich um eine Heizvorrichtung handeln, welche die zuvor erwähnten Vorformlinge während des Transports sukzessive aufheizt und hierdurch derart thermisch konditioniert, dass in der nachgeschalteten Blasvorrichtung eine plastische Verformung ermöglicht wird.

Zum Betriebsstart einer solchen Behälterbehandlungsanordnung ist es aus dem Stand der Technik bekannt, dass die Behältertransportvorrichtung und der Vereinzelungsstern in synchronisierter Art und Weise auf eine betriebsgemäße Transportgeschwindigkeit beschleunigt werden. Mit einer Synchronisierung der Bewegung ist im Rahmen der Erfindung gemeint, dass die Bewegungen der beiden Komponenten so aufeinander abgestimmt sind, dass die Behälter ohne Geschwindigkeitssprung übergeben werden können. Entsprechend stimmt die Geschwindigkeit des Vereinzelungssterns an dem Auslauf mit der Geschwindigkeit der Behältertransportvorrichtung am Einlauf überein.

Nachdem der Vereinzelungssterns und die Behältertransportvorrichtung auf die betriebsgemäße Transportgeschwindigkeit beschleunigt worden sind, kann der erste Behälter bzw. können die ersten Behälter zugeführt werden. Der erste Behälter befindet sich hierbei im Wesentlichen im Stillstand. Dies führt allerdings dazu, dass der erste Behälter und der Vereinzelungsstern eine hohe Relativgeschwindigkeit zueinander aufweisen, was zu einer Beschädigung oder gar Zerstörung des entsprechenden Behälters führen kann. Mit dem ersten Behälter ist somit der Behälter gemeint, welcher nach einem Stillstand der Behälterbehandlungsanordnung zuerst dem Vereinzelungsstern zugeführt wird.

Vor diesem Hintergrund lehrt die DE 10 2020 122 470 A1 ein Verfahren, bei dem zunächst die Behältertransportvorrichtung auf die Transportgeschwindigkeit beschleunigt wird und erst dann der Vereinzelungsstern zusammen mit dem ersten Behälter auf die Transportgeschwindigkeit beschleunigt. Entsprechend muss dann sichergestellt sein, dass der erste Behälter bei der Übergabe in die Behältertransportvorrichtung die betriebsgemäße Transportgeschwindigkeit aufweist. Zugleich muss auch sichergestellt sein, dass neben einer Angleichung der Geschwindigkeiten auch die Übergabe der Behälter in die Behältertransportvorrichtung durch geeignete Positionierung der Transportelemente gewährleistet ist. Die Steuerung und Synchronisierung ist daher vergleichsweise aufwändig.

Vor diesem Hintergrund liegt der Erfindung die Aufgabe zugrunde, ein Verfahren zum Betriebsstart anzugeben, welches die aus der Praxis bekannten Nachteile beseitigt und eine zuverlässige und zerstörungsfreie Zuführung der Behälter in den Vereinzelungsstern und entsprechend in die nachgeschaltete Behältertransportvorrichtung ermöglicht.

Gegenstand und Lösung dieser Aufgabe ist ein Verfahren, bei dem die Behältertransportvorrichtung und der Vereinzelungsstern während des Betriebsstarts miteinander synchronisiert den ersten Behälter entlang eines Zuführabschnittes der Transportstrecke auf eine betriebsgemäße Transportgeschwindigkeit beschleunigen.

Entsprechend erfolgt im Gegensatz zu den bislang bekannten Lösungen eine gemeinsame Beschleunigung der Behältertransportvorrichtung und des Vereinzelungssterns, wobei durch die Synchronisation sichergestellt wird, dass auch während der Beschleunigung eine Übereinstimmung der Transportgeschwindigkeit bei Auslauf des Vereinzelungssterns und am Eintritt der Behältertransportvorrichtung vorliegt, sodass entsprechend der erste Behälter problemlos und ohne Geschwindigkeitsdifferenz in die Behältertransportvorrichtung eingeführt werden kann.

Darüber hinaus können während des Betriebsstarts selbstverständlich auch weitere Behälter dem Vereinzelungsstern und auch der Behältertransportvorrichtung zugeführt werden. Dies entspricht auch dem Regelfall, da zum Betriebsstart die Behälterzuführung geöffnet und die Behälter nacheinander in die Transportstrecke eingebracht werden. Das beschleunigte Anfahren bestimmt sich jedoch anhand des ersten Behälters, wobei dieser am Ende des Zuführabschnittes die betriebsgemäße Transportgeschwindigkeit aufweisen muss. Die nachfolgenden Behälter weisen entsprechend bereits an einem früheren Teil des Zuführabschnittes die betriebsgemäße Transportgeschwindigkeit auf. Dies ist allerdings unproblematisch, da die Behälter aufgrund der kontinuierlichen Zuführung bereits beim Einbringen in den Vereinzelungsstern eine gewisse Geschwindigkeit aufweisen, sodass folglich das Einbringen in den Vereinzelungsstern unproblematisch ist.

Eine Weiterbildung der Erfindung sieht vor, dass die Behältertransportvorrichtung und/oder der Vereinzelungsstern vor der Zuführung des ersten Behälters eine Startgeschwindigkeit aufweisen. **In** diesem Zusammenhang ist anzumerken, dass sich die Geschwindigkeit der Behältertransportvorrichtung und des Vereinzelungssterns anhand der für die Transportstrecke relevanten Geschwindigkeit bemisst. So handelt es sich bei dem Vereinzelungsstern um eine Vorrichtung, welche rotierend ausgebildet ist und an seinem Umfang mehrere Aufnahmen für die einzelnen Behälter aufweist. Die Geschwindigkeit des Vereinzelungssterns bemisst sich daher anhand der Rotationsgeschwindigkeit des Vereinzelungssterns sowie dem für den Transport relevanten Durchmesser.

Bei der Behältertransportvorrichtung kann es sich ebenfalls um einen rotierbaren Transportstern handeln. Bevorzugt ist mit einer Behältertransportvorrichtung im Rahmen der Erfindung jedoch eine Ausgestaltung gemeint, bei der die Behälter entlang einer wesentlichen oval ausgebildeten Vorrichtung transportiert werden. Die Transportelemente sind hierbei beispielsweise an einer Transportkette oder einem Transportriemen angeordnet. Die Geschwindigkeit der Behältertransportvorrichtung bemisst sich daher anhand der Geschwindigkeit der Transportelemente. Ausgehend von einer solchen Betrachtung können nunmehr bevorzugt beide Komponenten - nämlich der Vereinzelungsstern und/oder die Behältertransportvorrichtung - vor der Zuführung des ersten Behälters eine Startgeschwindigkeit aufweisen, welche aber geringer ist als die betriebsgemäße Transportgeschwindigkeit.

Insofern wird der erste Behälter beispielsweise in einen bereits geringfügig rotierenden Vereinzelungsstern eingeführt. Diese Startgeschwindigkeit ist hierbei so bemessen, dass die Rotation nicht zu einer Beschädigung des Behälters führen kann. Zugleich ist eine bessere Vereinzelung möglich, sofern bereits eine geringfügige Startgeschwindigkeit vorliegt, wodurch das Risiko einer Zerstörung der Behälter weiter gesenkt wird. Ausgehend von der Startgeschwindigkeit wird dann zum Betriebsstart der Behälter von der Startgeschwindigkeit auf die betriebsgemäße Transportgeschwindigkeit beschleunigt.

Sofern lediglich der Vereinzelungsstern oder die Behältertransportvorrichtung mit einer Startgeschwindigkeit ausgebildet sind, so muss vor dem eigentlichen Betriebsstart eine Synchronisierung beider Anlagenkomponenten erfolgen, sodass folglich zumindest kurz vor dem Betriebsstart beide Anlagenkomponenten mit einer entsprechenden Startgeschwindigkeit betrieben werden bzw. dass zumindest bei der Übergabe des ersten Behälters an die Behältertransportvorrichtung eine solche synchronisierte Bewegung vorliegen muss.

Besonders bevorzugt ist allerdings eine Ausgestaltung, bei der die Behältertransportverrichtung und der Vereinzelungsstern zwangsgekoppelt angetrieben sind. Eine Zwangskopplung meint im Rahmen der Erfindung, dass beide Anlagenkomponenten mithilfe von nur einer Antriebseinrichtung betrieben werden, sodass automatisch eine Synchronisation der Bewegung des Vereinzelungssterns und der Behältertransportvorrichtung erfolgt. Bei einer solchen Zwangskopplung kann es sich beispielsweise um ein mechanisches Getriebe handeln, welches die Bewegung der Antriebseinrichtung auf beide Anlagenkomponenten überträgt. Dieses mechanische Getriebe ist dann so ausgebildet, dass die Rotation des Vereinzelungssterns und auch die Bewegung der Behältertransportvorrichtung entlang der Transportstrecke miteinander übereinstimmen. Durch die Einbindung von nur einer Antriebseinrichtung ist es aber auch von besonderer Bedeutung, dass diese ausreichend groß und leistungsstark ausgebildet sein muss. Entgegen den aus dem Stand der Technik bekannten Lösungen sind nunmehr nicht jeweils eine Antriebseinrichtung für den Vereinzelungsstern und die Behältertransportvorrichtung erforderlich. Gemäß einer solchen Ausgestaltung könnten die Antriebseinrichtungen kleiner und leistungsschwächer ausgewählt werden. Allerdings müsste dann auch mit einer entsprechenden Steuerung sichergestellt werden, dass die beiden Bewegungen miteinander synchronisiert sind.

Grundsätzlich liegt es auch im Rahmen der Erfindung, dass sowohl der Vereinzelungsstern als auch die Behältertransportvorrichtung jeweils mit einer Antriebseinrichtung ausgebildet sind, wobei dann über eine Steuerungseinrichtung eine Synchronisierung während des Betriebsstarts gewährleistet wird. Allerdings hat sich eine mechanische Kopplung der beiden Anlagenkomponenten als wesentlich vorteilhafter herausgestellt.

Bevorzugt wird der erste Behälter aus dem Stillstand entlang des Zuführabschnittes beschleunigt. Hierbei ist zu bedenken, dass die Behälter immer gemäß einer üblichen Ausgestaltungsweise vor dem Betriebsstart innerhalb der Behälterzuführung angeordnet sind. Beispielsweise kann diese Behälterzuführung als Zuführrutsche ausgebildet sein, wobei dann die Behälter allein aufgrund ihrer Schwerkraft beschleunigt werden und mit einer gewissen Geschwindigkeit in den Vereinzelungsstern rutschen. Während des Stillstandes hält ein Haltefinger die Behälter endseitig in der Zuführrutsche fest, sodass diese entsprechend nicht durch ihre Gravitation beschleunigen können. Für den Betriebsstart wird der Haltefinger gelöst und der erste Behälter rutscht in den Vereinzelungsstern, wobei dieser dann im Wesentlichen im Stillstand an den Vereinzelungsstern übergeben wird. Die dem ersten Behälter nachfolgenden Behälter weisen dann verstärkt durch den verlängerten Weg in der Zuführrutsche eine größere Geschwindigkeit auf, sodass auch der Vereinzelungsstern mit einer größeren Geschwindigkeit betrieben werden kann.

Gemäß einer Weiterbildung der Erfindung erstreckt sich der Zuführabschnitt der Transportstrecke in die Behältertransportvorrichtung hinein. Wie bereits zuvor erläutert, definiert die Transportstrecke den Weg, den die Behälter entlang des Vereinzelungsstern und der Behältertransportvorrichtung zurücklegen, sodass die Transportstrecke zwischen den Einlauf des Vereinzelungssterns und dem Auslauf der Behältertransportvorrichtung begrenzt ist. Grundsätzlich kommen je nach Behältertransportvorrichtung unterschiedliche Zuführabschnitte in Betracht, innerhalb dieser eine Beschleunigung des ersten Behälters auf die betriebsgemäße Transportgeschwindigkeit zu erfolgen hat. Grundsätzlich kann eine Beschleunigung erfolgen, während der erste Behälter ausschließlich in dem Vereinzelungsstern transportiert wird. Entsprechend erstreckt sich dann der Zuführabschnitt lediglich entlang des Vereinzelungssterns. Bevorzugt sieht die Erfindung jedoch vor, dass sich der Zuführabschnitt zumindest teilweise in die von der Behältertransportvorrichtung definierte Transportstrecke hineinerstreckt, sodass entsprechend ein längerer Abschnitt für die Beschleunigung zur Verfügung steht.

Eine besonders bevorzugte Ausgestaltung sieht vor, dass die Behältertransportvorrichtung als Heizvorrichtung mit zumindest einem Heizelement zur thermischen Konditionierung der Behälter ausgebildet ist, wobei das zumindest eine Heizelement in einem Konditionierungsabschnitt der Transportstrecke angeordnet ist. Auf eine solche Ausgestaltung wurde grundsätzlich bereits zuvor Bezug genommen, wobei eine solche Heizvorrichtung gerade in Zusammenhang mit einer nachgeschalteten Blasvorrichtung von besonderen Vorteil ist. In diesem Fall handelt es sich bei den Behältern um Vorformlinge, welche innerhalb der Heizvorrichtung und damit entlang eines Konditionierungsabschnittes thermisch konditioniert bzw. auf eine gewisse Temperatur aufgeheizt werden. Der Konditionierungsabschnitt beginnt hierbei an dem Punkt der Transportstrecke, an dem das Heizelement erstmals auf die Behälter einwirkt und somit eine Aufheizung dieser bewirkt.

Ausgehend von einer solchen Ausgestaltung ist bevorzugt vorgesehen, dass der Zuführabschnitt vor den Konditionierungsabschnitt endet oder unmittelbar an den Konditionierungsabschnitt angrenzt. In jedem Fall ist aber die Beschleunigung des ersten Behälters abgeschlossen, sobald das Heizelement in dem Konditionierungsabschnitt erstmals auf den ersten Behälter thermisch einwirkt. Eine solche Ausgestaltung gewährleistet, dass der erste Behälter bereits mit der betriebsgemäßen Transportgeschwindigkeit durch den Konditionierungsabschnitt geführt wird und somit in einer betriebsgemäßen Art und Weise thermisch konditioniert wird. Würde beispielsweise noch innerhalb des Konditionierungsabschnittes eine Beschleunigung auf die betriebsgemäße Transportgeschwindigkeit erfolgen, so hätte dies zur Folge, dass der Behälter für einen längeren Zeitraum entlang der Konditionierungsstrecke geführt würde und somit auch eine deutlich stärkere Aufheizung zur Folge hätte. Dies wäre dann für den nachgeschalteten Blasprozess von Nachteil, da die dortigen Prozessbedingungen stark mit der Aufheizung der Behälter in Verbindung stehen.

Gegenstand der Erfindung ist ferner eine Behältertransportanordnung mit einer Behälterzuführung, zumindest einer eine Vielzahl umlaufend rotierbar angeordneter Transportelemente aufweisenden Behältertransportvorrichtung und einem Vereinzelungsstern zum Überführen von Behältern aus der Behälterzuführung in die Transportelemente der Behältertransportvorrichtung, wobei der Vereinzelungsstern und die Behältertransportvorrichtung eine Transporteinheit bilden, welche über zumindest eine Antriebseinrichtung antreibbar ist und wobei der Antriebseinrichtung eine Steuereinheit zur Durchführung des erfindungsgemäßen Verfahrens zugeordnet ist. Entsprechend ist die Steuereinheit dazu ausgebildet und eingerichtet, die Transporteinheit während eines Betriebsstarts in einer synchronisierten Art und Weise zu beschleunigen, sodass ein erster in die Transporteinheit geführter Behälter am Ende des Zuführabschnittes eine betriebsgemäße Transportgeschwindigkeit aufweist.

Besonders bevorzugt es hierbei eine Ausgestaltung, bei der die Transporteinheit über eine gemeinsame Antriebseinrichtung antreibbar ist. Ausgehend hiervon ist dann bevorzugt vorgesehen, dass die Transporteinheit eine mechanische Kopplung aufweist, welche dazu eingerichtet ist, die Bewegung des Vereinzelungssterns mit der Bewegung der Behältertransportvorrichtung zu koppeln. Bei dieser mechanischen Kopplung kann es sich beispielsweise um ein Koppelungsgetriebe handeln.

Alternativ kann selbstverständlich auch die Steuerungseinheit dazu eingerichtet sein, jeweils eine Antriebseinrichtung des Vereinzelungssterns und der Blättertransporteinrichtung so miteinander zu betreiben und anzusteuern, dass diese einerseits in einer synchronisierten Art und Weise miteinander betrieben werden und zugleich eine Beschleunigung während des Betriebsstarts erfolgt. Hierbei wären dann deutlich kleinere und leistungsschwächere Antriebseinrichtungen ausreichend, da diese jeweils nur eine Anlagenkomponente antreiben müssten. Zugleich ist aber auch der Steuerungsaufwand wesentlich größer. Bei nur einer gemeinsamen Antriebseinrichtung und einer vorgesehenen mechanischen Kopplung ist ein entsprechend größerer und leistungsstärkerer Antrieb vorzusehen, wobei durch die mechanische Kopplung eine zusätzliche Steuerung für die Synchronisation entfällt. Unabhängig von der Ausgestaltung handelt es sich bei den Antriebseinrichtungen bevorzugt um Elektromotoren, insbesondere um Servomotoren.

Gemäß einer bevorzugten Ausgestaltung ist die Behältertransportvorrichtung als Heizvorrichtung mit zumindest einem entlang der Transportstrecke angeordneten Heizelement zum Aufheizen der Behälter ausgebildet. Insbesondere soll mit dem Heizelement eine thermische Konditionierung der Behälter erfolgen, wobei es sich dann bevorzugt um Vorformlinge für eine nachfolgende Blasumformung handelt.

Entsprechend sieht eine bevorzugte Ausgestaltung vor, dass eine Blasvorrichtung vorgesehen ist, welche über eine Übergabeeinrichtung an einen Auslauf der Behältertransportvorrichtung anschließt.

Bevorzugt ist die Behälterzuführung als Zuführrutsche oder als luftstromunterstützte Zuführung ausgebildet. Das Prinzip der Zuführrutsche wurde bereits zuvor erläutert. Bei einer luftstromunterstützte Zuführung werden die Behälter durch Einbringen von Druckluft beschleunigt und hierdurch in den Vereinzelungsstern eingebracht.

Die Behälterzuführung weiß bevorzugt ein stellbares Halteelement, insbesondere einen Haltefinger auf, welches dazu eingerichtet ist, in eine Haltestellung das Eintreten von Behältern in den Vereinzelungsstern zu blockieren. Für den Betriebsstart wird dieses Haltelement dann gelöst und die Behälter können in den Vereinzelungsstern eingeführt werden.

Im Folgenden wird die Erfindung anhand eines Ausführungsbeispiels, näher erläutert. Es zeigen:
- Fig. 1: eine schematische Darstellung einer erfindungsgemäßen Behältertransportanordnung als Teil einer Blasmaschine
- Fig. 2: ein Ausschnitt der Behältertransportanordnung gemäß Fig. 1 im Bereich des Zuführabschnittes
- Fig. 3: eine Darstellung des Geschwindigkeitsverlaufes des ersten Behälters
- Fig. 4: eine schematische Darstellung der Kopplung der Behältertransportvorrichtung mit dem Vereinzelungsstern

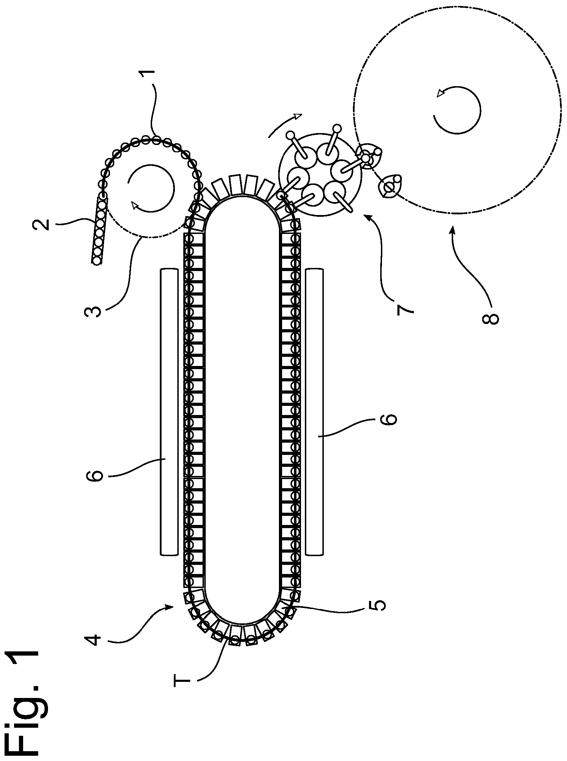

Die Fig. 1 zeigt eine erfindungsgemäße Behälterbehandlungsanordnung als Teil einer Blasmaschine in der Getränkeindustrie. Bei den Behältern 1 handelt es sich um sogenannte Vorformlinge, welche auch als Preforms bezeichnet werden, und welche über eine als Zuführrutsche ausgebildete Behälterzuführung 2 einem rotierbar angetriebenen Vereinzelungsstern 3 zugeführt werden. In dem Vereinzelungsstern 3 werden die Behälter 1 zu einem gewissen Maße zueinander beabstandet und durch Rotation des Vereinzelungssterns in eine Behältertransportvorrichtung 4 überführt.

Die Behältertransportvorrichtung 4 weist hierzu eine Vielzahl von Transportelementen 5 auf, in die die Behälter 1 bei der Übergabe aus dem Vereinzelungsstern 3 eingebracht werden und über die die Behälter in der Behältertransportvorrichtung 4 transportiert werden.

Der Vereinzelungsstern 3 und die Behältertransportvorrichtung 4 bilden darüber hinaus eine Transportstrecke T, entlang der die Behälter 1 zwischen der Behälterzuführung 2 und einem Auslauf der Behältertransportvorrichtung 4 transportiert werden. Die Behälterzuführung 1 und die Behältertransportvorrichtung 4 bilden hierzu eine Transporteinheit.

Die Behältertransportvorrichtung 1 ist aber nicht ausschließlich für den Transport der Behälter 1 vorgesehen. Vielmehr erfolgt auch eine Behandlung durch Heizelemente 6. Entsprechend ist die Behältertransportverrichtung 4 als Heizvorrichtung ausgebildet und dient dazu, die entlang der Transportstrecke T bewegten Behälter 1 während des Transports thermisch zu konditionieren. Eine thermische Konditionierung meint in diesem Zusammenhang die Aufheizung der Behälter 1 auf eine vorbestimmte Temperatur, welche dazu geeignet ist, die Behälter in einem nachfolgenden Prozessschritt durch Einbringung von Druckluft plastisch zu verformen. Diese plastische Verformung dient der Ausbildung der Behälter 1 zu Getränkebehältern, insbesondere zu Getränkeflaschen. Die Vorformlinge sind daher aus einem thermoplastischen Kunststoff gebildet. Besonders Polyethylenterephthalat (PET) hat sich hierzu als besonders geeignet herausgestellt.

Nach dem Durchlaufen der Transportstrecke T werden die Behälter 1 aus den Transportelementen 5 der Behältertransportvorrichtung 4 über eine Greiferanordnung 7 entnommen und einer Blasvorrichtung 8 zugeführt, in der dann die plastische Verformung bzw. plastische Ausformung der als Vorformlinge ausgebildeten Behälter 1 erfolgt.

Die grundsätzliche Art und Weise der Behälterbehandlungsanordnung, welche in der Fig. 1 dargestellt ist, ist grundsätzlich aus dem Stand der Technik bekannt. Eine besondere Bedeutung kommt in diesem Zusammenhang allerdings dem Antrieb des Vereinzelungsstern 3 und der Behältertransportvorrichtung 4 sowie auch der Steuerung dieses Antriebes zu, wobei in der Fig. 1 weder der Antrieb noch die Steuereinheit explizit dargestellt ist. Allerdings müssen diese Komponenten für einen nachfolgend beschriebenen Betriebsstart eingerichtet und ausgebildet sein.

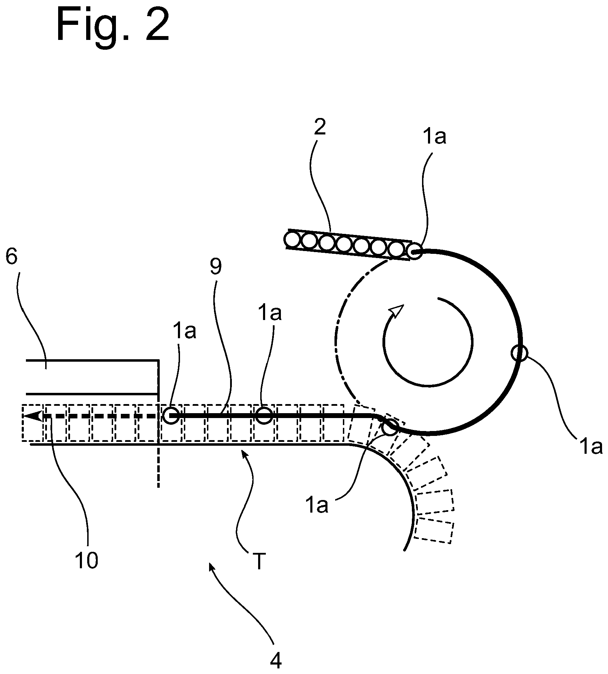

Dieser Betriebsstart wird insbesondere anhand der Fig. 2 deutlich, welche lediglich einen Ausschnitt der Behälterbehandlungsanordnung im Bereich des Vereinzelungssterns 3 sowie in einem Einlauf der Behältertransportverrichtung 4 zeigt. Grundsätzlich ist hierbei zunächst davon auszugehen, dass sämtliche Komponenten sich im Stillstand befinden. In einem solchen Stillstand kann beispielsweise eine Wartung oder aber auch Reinigung der Behälterbehandlungsanordnung erfolgen.

Sodann erfolgt der Betriebsstart der Behälterbehandlungsanordnung, wobei zunächst sowohl der Vereinzelungsstern 3 als auch die Behältertransportvorrichtung 4 auf eine Startgeschwindigkeit v₀ beschleunigt werden. Die Behälterzuführung 2 ist in diesem Zusammenhang noch geschlossen. In einem solchen geschlossenen Zustand blockiert ein stellbares Halteelement z.B. in Form eines Haltefingers die Zufuhr von Behältern 1 in den Vereinzelungsstern 2. Die Behälter 1 sind folglich innerhalb der als Zufuhrrutsche ausgebildeten Behälterzuführung 2 angeordnet. Das bedeutet gleichzeitig aber auch, dass ein erster nach der Öffnung der Behälterzuführung 2 in den Vereinzelungsstern eingeführte Behälter 1a keine bzw. nur eine sehr geringe Geschwindigkeit aufweist, wenn dieser in den Vereinzelungsstern 2 eingeführt wird, da die über die Zuführrutsche vorgesehene Geschwindigkeit noch nicht erreicht werden kann. Insofern wird eine Startgeschwindigkeit von v₀ gewählt, die ein reibungsfreies Einbringen des ersten Behälters 1a in den Vereinzelungsstern 3 ermöglicht.

Die Fig. 2 zeigt nun insbesondere den Betriebsstart, wobei der Behälter 1a exemplarisch an verschiedenen Positionen entlang der Transportstrecke T dargestellt ist, wobei die Transportstrecke T mit einem Zuführabschnitt 9 und mit einem unmittelbar daran anschließenden Konditionierungsabschnitt 10 dargestellt ist. Die Bedeutung dieser beiden Streckenabschnitte wird im Folgenden nun näher erläutert.

Wie bereits zuvor erläutert, ist die Behältertransportvorrichtung 4 als Heizvorrichtung ausgebildet und weist demnach Heizelemente 6 auf, welche die Behälter 1 thermisch konditionieren. Entscheidend für die thermische Konditionierung ist, dass die Behälter 1 für einen vordefinierten Zeitraum entlang dieser üblicherweise als Wärmestrahlenelemente ausgebildeten Heizelemente 6 entlang geführt werden. Als Wärmestrahlenelemente kommen insbesondere Infrarotstrahler zum Einsatz. Insofern muss für den Betriebsstart auch gewährleistet werden, dass der erste Behälter 1a für diesen vordefinierten Zeitraum entlang der Heizelemente 6 entlang geführt wird. Entsprechend muss vor Erreichen des Konditionierungsabschnittes 10 sichergestellt werden, dass der erste Behälter 1a die vorbestimmte Transportgeschwindigkeit v_{T} aufweist.

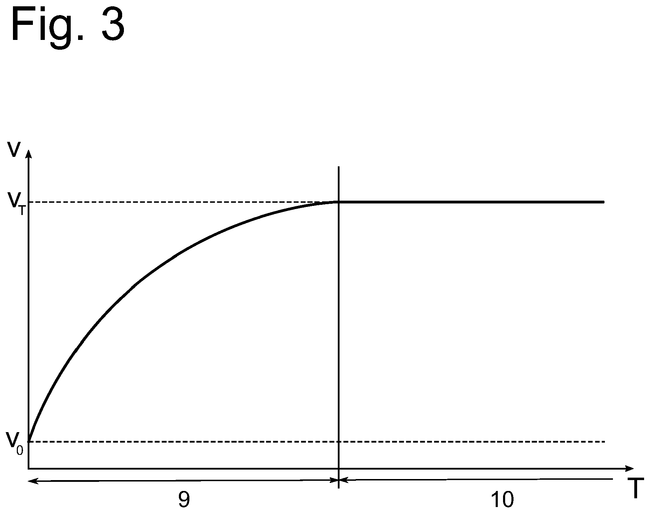

Ausgehend von diesen Überlegungen ist dann der Zuführabschnitt 9 vorgesehen, in dem sowohl der Vereinzelungsstern 3 als auch die Behältertransportvorrichtung 4 in einer synchronisierte Art und Weise beschleunigt werden müssen, sodass auch der erste Behälter 1a auf die vorbestimmte Transportgeschwindigkeit v_{T} beschleunigt wird. Dieser Zusammenhang geht insbesondere aus der Fig. 3 hervor, welche in einem Diagramm den Geschwindigkeitsverlauf des ersten Behälters 1a nach der Zuführung in den Vereinzelungsstern 3 zeigt. Grundsätzlich reicht es hierbei aus, wenn vor dem Konditionierungsabschnitt 10 die vorbestimmte Transportgeschwindigkeit v_{T} erreicht ist.

Gemäß der Fig. 3 wird allerdings der gesamte Zuführabschnitt 9 so ausgedehnt, dass dieser unmittelbar an den Konditionierungsabschnitt 10 heranreicht, sodass der Vereinzelungsstern 3 und die Behältertransportverrichtung 4 als Transporteinheit so gering wie möglich beschleunigt werden müssen.

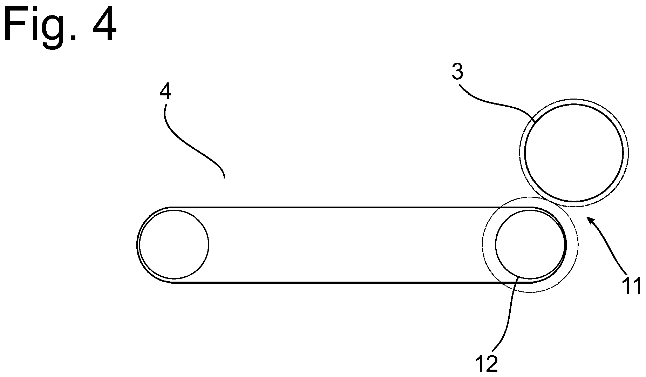

Anhand der Fig. 4 wird ferner deutlich, dass die Behältertransportvorrichtung 4 als auch der Vereinzelungsstern 3 über eine mechanische Kopplung in Form eines Kopplungsgetriebes 11 miteinander verbunden sind, sodass beide Anlagenkomponenten über eine gemeinsame Antriebsvorrichtung 12 in einer synchronisierten Art und Weise miteinander gekoppelt sind. Dies vereinfacht die gemeinsame Beschleunigung der beiden Anlagenkomponenten während des Betriebsstarts, sodass die Steuereinheit lediglich die Beschleunigung zu steuern hat. Denkbar ist selbstverständlich auch eine Ausgestaltung, bei der beide Anlagenkomponenten eine eigene Antriebsvorrichtung 12 aufweisen, sodass folglich keine mechanische Kopplung notwendig ist. Sodann muss dann allerdings auch die Steuereinheit so ausgebildet und eingerichtet sein, dass während des beschleunigten Anfahrens bei der Übergabe des ersten Behälters eine Synchronisation gewährleistet wird.

## Patentansprüche

1. Verfahren zum Betrieb einer Behälterbehandlungsanordnung mit einer Behälterzuführung (2), zumindest einer eine Vielzahl umlaufend rotierbar angeordneter Transportelemente (5) aufweisenden Behältertransportvorrichtung (4) und einem Vereinzelungsstern (3) zum Überführen von Behältern (1) aus der Behälterzuführung (2) in die Transportelemente (5) der Behältertransportvorrichtung (4), wobei zum Betriebsstart ein erster Behälter (1a) dem Vereinzelungsstern (3) zugeführt und in einer Bewegung entlang einer Transportstrecke (T) durch Rotation des Vereinzelungssterns (3) in die Behältertransportvorrichtung (4) überführt und in der Behältertransportvorrichtung (4) transportiert wird,
**dadurch gekennzeichnet, dass**
die Behältertransportvorrichtung (4) und der Vereinzelungsstern (3) während des Betriebsstarts miteinander synchronisiert den ersten Behälter (1a) entlang eines Zuführabschnittes (9) der Transportstrecke (T) auf eine betriebsgemäße Transportgeschwindigkeit (v_{T}) beschleunigen.

2. Verfahren nach Anspruch 1, **dadurch gekennzeichnet, dass** die Behältertransportvorrichtung (4) und/oder der Vereinzelungsstern (3) vor der Zuführung des ersten Behälters (1a) eine Startgeschwindigkeit (v₀) aufweisen.

3. Verfahren nach Anspruch 1 oder 2, **dadurch gekennzeichnet, dass** die Behältertransportvorrichtung (4) und der Vereinzelungsstern (3) zwangsgekoppelt angetrieben sind.

4. Verfahren nach einem der Ansprüche 1 bis 3, **dadurch gekennzeichnet, dass** der erste Behälter (1a) aus dem Stillstand entlang des Zuführabschnittes (9) beschleunigt wird.

5. Verfahren nach einem der Ansprüche 1 bis 4, **dadurch gekennzeichnet, dass** sich der Zuführabschnitt (9) der Transportstrecke (T) in die Behältertransportvorrichtung (4) hineinerstreckt.

6. Verfahren nach einem der Ansprüche 1 bis 4, **dadurch gekennzeichnet, dass** der Zuführabschnitt (9) der Transportstrecke (T) vor der Übergabe der Behälter (1) in die Behältertransportvorrichtung (4) endet.

7. Verfahren nach einem der Ansprüche 1 bis 6, **dadurch gekennzeichnet, dass** die Behältertransportvorrichtung (4) als Heizvorrichtung mit zumindest einem Heizelement (6) zur thermischen Konditionierung der Behälter (1) ausgebildet ist, wobei das zumindest eine Heizelement (6) in einem Konditionierungsabschnitt (10) der Transportstrecke (T) angeordnet ist.

8. Verfahren nach Anspruch 7, **dadurch gekennzeichnet, dass** der Zuführabschnitt (9) vor dem Konditionierungsabschnitt (10) endet oder unmittelbar an den Konditionierungsabschnitt (10) angrenzt.

9. Behälterbehandlungsanordnung mit einer Behälterzuführung (2), zumindest einer eine Vielzahl umlaufend rotierbar angeordneter Transportelemente (5) aufweisenden Behältertransportvorrichtung (4) und einem Vereinzelungsstern (3) zum Überführen von Behältern (1) aus der Behälterzuführung (2) in die Transportelemente (5) der Behältertransportvorrichtung (4), wobei der Vereinzelungsstern (3) und die Behältertransportvorrichtung (4) eine Transporteinheit bilden, welche über zumindest eine Antriebseinrichtung (12) antreibbar ist und wobei der Antriebseinrichtung (12) eine Steuereinheit zur Durchführung des Verfahrens gemäß einem der Ansprüche 1 bis 7 zugeordnet ist.

10. Behälterbehandlungsanordnung nach Anspruch 9, **dadurch gekennzeichnet, dass** die Transporteinheit über eine gemeinsame Antriebseinrichtung (12) antreibbar ist.

11. Behälterbehandlungsanordnung nach Anspruch 9 oder 10, **dadurch gekennzeichnet, dass** die Transporteinheit eine mechanische Kopplung aufweist, welche dazu eingerichtet ist, die Bewegung des Vereinzelungssterns (3) mit der Bewegung der Behältertransportvorrichtung (4) zu koppeln.

12. Behälterbehandlungsanordnung nach Anspruch 11, **dadurch gekennzeichnet, dass** die mechanische Kopplung ein Koppelungsgetriebe (11) ist.

13. Behälterbehandlungsanordnung nach einem der Ansprüche 9 bis 12, **dadurch gekennzeichnet, dass** die Behältertransportvorrichtung (4) als Heizvorrichtung mit zumindest einem entlang der Transportstrecke (T) angeordneten Heizelement (6) zum Aufheizen der Behälter (1) ausgebildet ist.

14. Behälterbehandlungsanordnung nach einem der Ansprüche 9 bis 13, **dadurch gekennzeichnet, dass** eine Blasvorrichtung (8) vorgesehen ist, welche über eine Übergabeeinrichtung (7) an einen Auslauf der Behältertransportvorrichtung (4) anschließt.

15. Behälterbehandlungsanordnung nach einem der Ansprüche 9 bis 14, **dadurch gekennzeichnet, dass** die Behälterzuführung (2) als Zuführrutsche oder als luftstromunterstützte Zuführung ausgebildet ist.

16. Behältertransportanordnung nach einem der Ansprüche 9 bis 15, wobei die Behälterzuführung (2) ein stellbares Haltelement aufweist, welches dazu eingerichtet ist, in einer Haltestellung das Eintreten von Behältern (1) in den Vereinzelungsstern (3) zu blockieren.

17. Behältertransportanordnung nach einem der Ansprüche 9 bis 16, wobei die Antriebseinrichtung (12) ein Elektromotor, insbesondere ein Servomotor, ist.

## Claims

1. A method for operating a container handling system with a container feeder (2), at least one container transport device (4) having a plurality of continuously rotatably arranged transport elements (5) and a spreader star (3) for transferring containers (1) from the container feeder (2) into the transport elements (5) of the container transport device (4), wherein operations start with a first container (1a) being fed to the spreader star (3) and moved along a transport path (T) by rotating the spreader star (3) so as to be transferred to the container transport device (4) and transported in the container transport device (4)
**characterized in that**
the container transport device (4) and the spreader star (3) are synchronized with each when operations start so as to accelerate the first container (1a) along a feed section (9) of the transport path (T) to an operating transport velocity (V_{T}).

2. The method according to claim 1, **characterized in that** the container transport device (4) and/or the spreader star (3) have a starting velocity (v₀) before feeding the first container (1a).

3. The method according to claim 1 or 2, **characterized in that** the container transport device (4) and the spreader star (3) are driven by a forced-coupling system.

4. The method according to one of claims 1 to 3, **characterized in that** the first container (1a) is accelerated from a standstill along the feed section (9).

5. The method according to one of claims 1 to 4, **characterized in that** the feed section (9) of the transport path (T) extends into the container transport device (4).

6. The method according to one of claims 1 to 4, **characterized in that** the feed section (9) of the transport path (T) ends before the container (1) is transferred into the container transport device (4).

7. The method according to one of claims 1 to 6, **characterized in that** the container transport device (4) is designed as a heating device with at least one heating element (6) for thermally conditioning the container (1), wherein the at least one heating element (6) is arranged in a conditioning section (10) of the transport path (T).

8. The method according to claim 7, **characterized in that** the feed section (9) ends before the conditioning section (10) or is directly adjacent to the conditioning section (10).

9. A container handling system with a container feeder (2), at least one container transport device (4) having a plurality of continuously rotatably arranged transport elements (5) and a spreader star (3) for transferring containers (1) from the container feeder (2) into the transport elements (5) of the container transport device (4), wherein spreader star (3) and the container transport device (4) form a transport unit, which can be driven by at least one drive system (12), and wherein the drive system (12) has allocated to it a control unit for implementing the method according to one of claims 1 to 7.

10. The container handling system according to claim 9, **characterized in that** the transport unit can be driven by a shared drive system (12).

11. The container handling system according to claim 9 or 10, **characterized in that** the transport unit has a mechanical coupling, which is set up to couple the movement of the spreader star (3) with the movement of the container transport device (4).

12. The container handling system according to claim 11, **characterized in that** the mechanical coupling is a coupling gear (11).

13. The container handling system according to one of claims 9 to 12, **characterized in that** the container transport device (4) is designed as a heating device with at least one heating element (6) arranged along the transport path (T) for heating up the container (1).

14. The container handling system according to one of claims 9 to 13, **characterized in that** a blowing device (8) is provided, which hooks up to a outlet of the container transport device (4) via a transfer device (7).

15. The container handling system according to one of claims 9 to 14, **characterized in that** the container feeder (2) is designed as a feed chute or an air-assisted feeder.

16. The container handling system according to one of claims 9 to 15, wherein the container feeder (2) has an adjustable retaining element, which in the holding position is set up to block the entry of containers (1) into the spreader star (3).

17. The container handling system according to one of claims 9 to 16, wherein the drive system (12) is an electric motor, in particular a servomotor.

## Revendications

1. Procédé opérationnel d'un ensemble de traitement de contenants, pourvu d'une alimentation de contenants (2), d'au moins un dispositif de transport (4) de contenants comportant une pluralité d'éléments de transport (5) placés en étant susceptibles de tourner en révolution et d'une étoile de désolidarisation (3), destinée à transférer des contenants (1) de l'alimentation de contenants (2) dans les éléments de transport (5) du dispositif de transport (4) de contenants, pour la mise en service, un premier contenant (1a) étant alimenté vers l'étoile de désolidarisation (3) et dans un déplacement le long d'un trajet de transport (T), par rotation de l'étoile de désolidarisation (3), étant transféré dans le dispositif de transport (4) de contenants et transporté dans le dispositif de transport (4) de contenants,
**caractérisé en ce que**
pendant la mise en service, en synchronisation mutuelle, le dispositif de transport (4) de contenants et l'étoile de désolidarisation (3) accélèrent à une vitesse de transport (v_{T}) opérationnelle le premier contenant (1a) le long d'un tronçon d'alimentation (9) du trajet de transport (T).

2. Procédé selon la revendication 1, **caractérisé en ce qu'**avant l'alimentation du premier contenant (1a), le dispositif de transport (4) de contenants et / ou l'étoile de désolidarisation (3) présentent une vitesse de démarrage (v₀).

3. Procédé selon la revendication 1 ou 2, **caractérisé en ce que** le dispositif de transport (4) de contenants et l'étoile de désolidarisation (3) sont entraînés par couplage forcé.

4. Procédé selon l'une quelconque des revendications 1 à 3, **caractérisé en ce que** le premier contenant (1a) est accéléré à partir de l'arrêt le long du tronçon d'alimentation (9).

5. Procédé selon l'une quelconque des revendications 1 à 4, **caractérisé en ce que** le tronçon d'alimentation (9) du trajet de transport (T) s'étend à l'intérieur du dispositif de transport (4) de contenants.

6. Procédé selon l'une quelconque des revendications 1 à 4, **caractérisé en ce que** le tronçon d'alimentation (9) du trajet de transport (T) se termine avant le transfert des contenants (1) dans le dispositif de transport (4) de contenants.

7. Procédé selon l'une quelconque des revendications 1 à 6, **caractérisé en ce que** le dispositif de transport (4) de contenants est conçu avec en tant que dispositif de chauffage au moins un élément chauffant (6), pour le conditionnement thermique des contenants (1), l'au moins un élément chauffant (6) étant placé dans un tronçon de conditionnement (10) du trajet de transport (T).

8. Procédé selon la revendication 7, **caractérisé en ce que** le tronçon d'alimentation (9) se termine avant le tronçon de conditionnement (10) ou est directement limitrophe au tronçon de conditionnement (10).

9. Ensemble de traitement de contenants, pourvu d'une alimentation de contenants (2), d'au moins un dispositif de transport (4) de contenants comportant une pluralité d'éléments de transport (5) placés en étant susceptibles de tourner en révolution et d'une étoile de désolidarisation (3), destinée à transférer des contenants (1) de l'alimentation de contenants (2) dans les éléments de transport (5) du dispositif de transport (4) de contenants, l'étoile de désolidarisation (3) et le dispositif de transport (4) de contenants constituant une unité de transport, laquelle est susceptible d'être entrainée par l'intermédiaire d'au moins un système d'entraînement (12) et au système d'entraînement (12) étant affectée une unité de commande, pour la réalisation du procédé selon l'une quelconque des revendications 1 à 7.

10. Ensemble de traitement de contenants selon la revendication 9, **caractérisé en ce que** l'unité de transport est susceptible d'être entraînée par l'intermédiaire d'un système d'entraînement (12) commun.

11. Ensemble de traitement de contenants selon la revendication 9 ou 10, **caractérisé en ce que** l'unité de transport comporte un couplage mécanique, lequel est configuré pour coupler le déplacement de l'étoile de désolidarisation (3) avec le déplacement du dispositif de transport (4) de contenants.

12. Ensemble de traitement de contenants selon la revendication 11, **caractérisé en ce que** le couplage mécanique est une transmission de couplage (11).

13. Ensemble de traitement de contenants selon l'une quelconque des revendications 9 à 12, **caractérisé en ce que** le dispositif de transport (4) de contenants est conçu avec en tant que dispositif de chauffage, au moins un élément chauffant (6), placé le long du trajet de transport (T) pour chauffer les contenants (1).

14. Ensemble de traitement de contenants selon l'une quelconque des revendications 9 à 13, **caractérisé en ce qu'**il est prévu un dispositif de soufflage (8), lequel par l'intermédiaire d'un système de transfert (7) se raccorde sur une évacuation du dispositif de transport (4) de contenants.

15. Ensemble de traitement de contenants selon l'une quelconque des revendications 9 à 14, **caractérisé en ce que** l'alimentation de contenants (2) est conçue sous la forme d'une trémie d'alimentation ou d'une alimentation assistée par flux d'air.

16. Ensemble de transport de contenants selon l'une quelconque des revendications 9 à 15, l'alimentation de contenants (2) comportant un élément de retenue réglable, lequel est configuré pour bloquer dans une position de retenue l'entrée de contenants (1) dans l'étoile de désolidarisation (3).

17. Ensemble de transport de contenants selon l'une quelconque des revendications 9 à 16, le système d'entraînement (12) étant un moteur électrique, notamment un servomoteur.
